# FASCICULE DE BREVET EUROPEEN

(11) **EP 0 715 163 B1**
(45) Date de publication et mention de la délivrance du brevet: **08.08.2001**
(21) Numéro de dépôt: 95402658.9
(22) Date de dépôt: 24.11.1995
(51) Int. Cl.: G01N 21/55

(54) **Dispositif de contrôle de la qualité et de la continuité d'un cordon de produit déposé sur une surface**
Vorrichtung zur Qualitäts- und Kontinuitätskontrolle eines auf eine Oberfläche aufgebrachten Streifens
Device for controlling the quality and the continuity of a ribbon applied onto a surface

(30) Priorité: 28.11.1994 FR 9414224
(43) Date de publication de la demande: 05.06.1996
(73) Titulaire: Renault Automation Comau, 92365 Meudon La Forêt Cedex (FR)
(72) Inventeur: Pajot, Daniel, F-91070 Bondoufle (FR)
(74) Mandataire: Robert, Jean-Pierre

(56) Documents cités:
- EP-A- 0 454 561
- EP-A- 0 619 482

## Description

La présente invention concerne le contrôle automatique de la présence, de la continuité et de la régularité d'un cordon de produit tel qu'un cordon de colle déposé sur une surface formant par exemple plan de joint entre deux éléments d'un carter de machine.

Depuis plusieurs années, l'étanchéité entre deux pièces d'un carter bridées l'une sur l'autre, est réalisée par le dépôt et l'écrasement d'un cordon de produit pâteux déposé sur la surface de bridage, généralement plane, de l'une des deux pièces sur l'autre.

Il existe plusieurs techniques pour assurer la surveillance de la continuité et de la régularité d'un cordon. La plupart d'entre elles sont fondées sur le principe de l'éclairement du cordon par un faisceau lumineux, incident dont on recueille pour analyse la fraction réfléchie par le cordon et la surface immédiatement voisine du support au moyen d'un capteur approprié. La lumière d'éclairement est transmise au voisinage de la scène par un faisceau de fibre optique et la lumière réfléchie est recueillie par ce capteur généralement situé à l'aplomb de la scène éclairée. Pour bénéficier d'un maximum d'énergie réfléchie, l'éclairement est perpendiculaire à la scène (voir les documents EP 0 454 561 et EP 0 619 482). On a constaté que cette disposition présente au moins un inconvénient. En effet, lorsque le capteur est une matrice de cellules de caméra vidéo, scrutée par balayage, on mesure la largeur du cordon (pour la comparer à une valeur de consigne) en comptant le nombre de cellules ayant reçu une énergie lumineuse réfléchie correspondant à celle que doit réfléchir le cordon entre les deux bords de celui-ci. La détection des bords constitue des tops de départ et d'arrêt du comptage pour chaque ligne de balayage. Cette détection est obtenue par la constatation d'un écart d'énergie reçu par deux cellules adjacentes qui signifient que la lumière reçue par l'une provient du support et celle reçue par l'autre provient du cordon (et inversement). Ce mode de contrôle ne fonctionne correctement que dans l'hypothèse où le balayage ne fait apparaître que deux occurrences d'écart d'énergie au long d'une ligne. Or l'état de surface du support, la nature du cordon engendrant des reflet qui modifient localement la réflection de l'éclairage incident le long d'une ligne de balayage si bien que le capteur peut rencontrer des zones de transition interprétées comme des tops qui ne correspondent pas à la largeur du cordon contrôlé.

Pour pallier cet inconvénient, l'invention a pour objet un dispositif pour contrôler le cordon d'un produit formant joint, délivré sur une surface par l'extrémité d'une buse déplacée au-dessus de cette surface le long d'un trajet déterminé, comportant derrière la buse par rapport à son sens de déplacement des moyens d'éclairement par un faisceau lumineux de la fraction du cordon fraîchement déposée et un organe de détection d'une partie réfléchie de ce faisceau, relié à une unité de traitement, comprenant un capteur constitué par une matrice de cellule de caméra vidéo scrutée par balayage ce, conformément au document EP 0 619 482. Selon la caractéristique principale de l'invention, les moyens d'éclairement sont orientés de manière à produire un faisceau lumineux oblique par rapport à la surface portant le cordon pour créer, aux limites arrière et avant de la scène éclairée, dans le sens de déplacement de la buse, une zone dans laquelle seul l'un des éléments cordon ou surface est éclairé, et le capteur intercepte la lumière réfléchie par au moins l'une de ces zones.

Cet éclairage oblique de la scène surveillée par le capteur permet d'une part de diminuer les reflets et brillances qui pourraient être engendrés par un éclairage perpendiculaire. En outre et surtout, un tel éclairage oblique mais sensiblement parallèle au plan perpendiculaire de la surface qui contient le tronçon de cordon éclairé et observé par le capteur, présente l'avantage de faire apparaître le relief du cordon aux bords avant et arrière de la scène éclairée. C'est en scrutant par un balayage transversal au cordon les zones marginales de la zone éclairée que l'on peut exploiter de manière sûre le contraste entre une zone éclairée par exemple le cordon, et une zone non éclairée par exemple la surface.

L'invention sera mieux comprise au cours de la description qui en sera donnée ci-après à titre d'exemple et qui permettra d'en faire apparaître les avantages et les caractéristiques secondaires.

Il sera fait référence aux dessins annexés dans lesquels :
- la figure 1 est une vue schématique du dispositif conforme à l'invention,
- la figure 2 illustre la scène éclairée par un faisceau oblique,
- la figure 3 est une vue de dessus de cette scène.

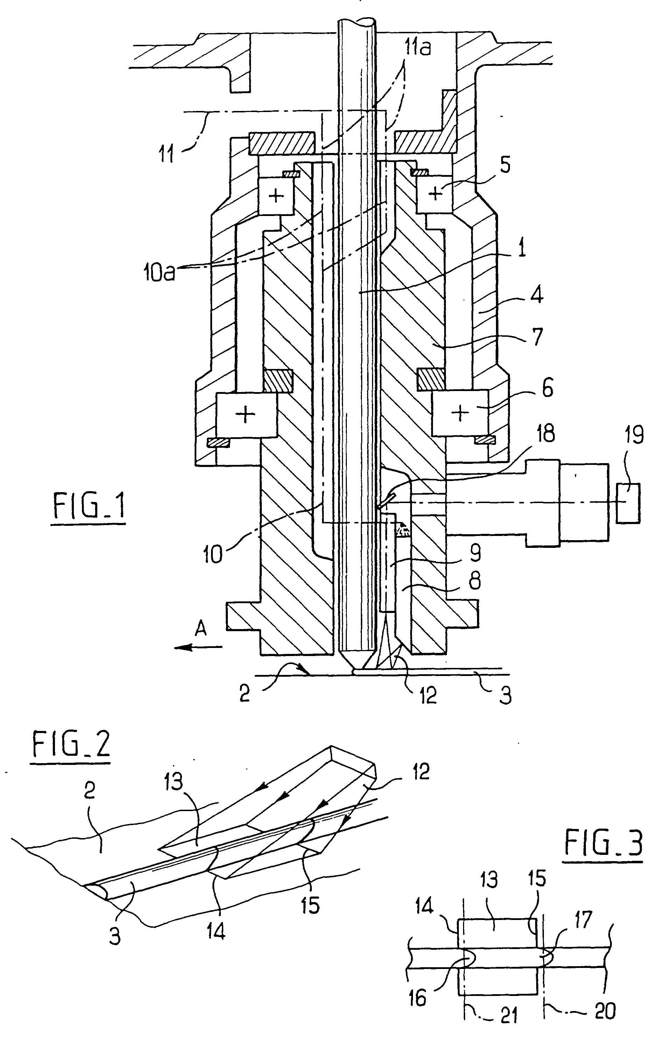

A la figure 1 on a représenté schématiquement une buse 1 délivrant sur une surface 2 un cordon 3 de colle ou de produit d'étanchéité. Cette buse est solidaire d'un support 4 qui est entraîné le long d'un trajet prédéterminé au-dessus de la surface 2, ce support constituant un palier (au moyen de par exemple de roulements 5 et 6) pour un corps 7 qui peut tourner grâce au palier 5 et 6 autour de l'axe de la buse.

Ce corps 7 porte un dispositif 8 d'éclairement d'une portion de la surface 2 et du cordon 3 qui vient d'y être déposé par la buse 1 et un dispositif 9 de recueil de la lumière réfléchie parallèlement à l'axe vertical de la buse par la scène éclairée par le dispositif 8.

De manière connue, l'énergie lumineuse est apportée au dispositif 8, qui comporte une optique appropriée, au moyen d'un faisceau de fibres optiques 10 solidaire du corps 7 et dont une extrémité 10a est conformée en une couronne annulaire entourant la buse 1 pour être placée en regard de l'extrémité 11a d'un faisceau de fibres optiques 11 solidaire du support 4. Les extrémités 10a et 15a de ces faisceaux constituent un joint tournant optique.

La position angulaire du corps 7 par rapport à la buse 1 est constamment asservie par un dispositif non représenté à la position du cordon 3 de manière que les dispositifs 8 et 9 d'éclairement et de recueil de la lumière réfléchie concernent constamment la portion de cordon 3 fraîchement déposée par la buse 1 se déplaçant au-dessus de la surface 2. Le sens de déplacement est noté par la flèche A sur la figure 1.

Les moyens optiques contenus par le dispositif 8 permettent de créer un faisceau 12 d'éclairement du cordon 3 et de la surface 2 qui n'est pas perpendiculaire à cette surface 2. Dans le cas illustré, le faisceau est incliné en direction de l'extrémité de la buse 1 pour éclairer une scène qui est très voisine de cette extrémité et à l'aplomb de laquelle le dispositif 9 de recueil de la lumière réfléchie est situé. Ainsi, dans ce mode de réalisation, le dispositif 9 est-il situé entre la buse et l'émetteur de lumière 8. On remarquera que les rayons incidents du faisceau sont sensiblement contenus dans un plan parallèle à celui de l'axe de la buse pour éviter la formation d'une ombre portée le long du cordon 3. La scène éclairée 13, vue de dessus, est de la forme représentée à la figure 3. Cette forme est la conséquence du relief que forme le cordon 3 par rapport à la surface 2 qui donc est atteint par les rayons lumineux du faisceau 12 avant cette surface 2. Ainsi les limites avant 14 et arrière 15 de la zone 13 comportent respectivement un embrèvement 16 sombre qui pénètre à l'intérieur de la zone lumineuse 13 et une excroissance 17 claire qui pénètre à l'intérieur de la zone sombre qui suit de bord arrière 15 de la zone lumineuse 13.

L'image de la figure 3 est renvoyée par un miroir 18 en direction d'un détecteur par exemple une caméra à cellules numériques 19. Cette caméra peut se résumer à une seule ligne de cellules disposées de manière à examiner l'une des deux zones 20 ou 21 de l'image représentée à la figure 3. La zone 20 est une zone étroite de l'image de la figure 3 placée de manière à couper transversalement l'excroissance lumineuse 17 au voisinage du bord 15 de la surface éclairée. La zone 21 est une zone étroite qui elle, est placée au voisinage du bord 14 avant de la zone éclairée pour couper l'embrèvement 16 sombre à l'intérieur de la zone 13. On comprend qu'en balayant cette ligne de cellules il est possible d'une part de détecter la frontière entre zone sombre et zone claire puisque la zone sombre est une zone non éclairée et d'autre part de compter le nombre de cellules concernées soit par la zone de cordon éclairée dans la zone 20 soit par la zone de cordon sombre dans la zone 21. Ce comptage permet d'obtenir une valeur représentative de la largeur de ce cordon. Le passage d'une zone sombre à une zone claire met en jeu des différences de niveau d'énergie telles qu'il est facile de procéder à un seuillage de la mesure. Ceci facilite grandement la détection du cordon par rapport aux techniques précédentes où il fallait que le capteur puisse distinguer non pas entre une zone sombre et une zone claire mais entre des pouvoirs réflecteurs différents (éventuellement sur certaines longueurs d'ondes de la lumière réfléchie) entre la surface 2 et le cordon 3.

## Revendications

1. Dispositif pour contrôler le cordon (3) d'un produit formant joint, délivré sur une surface (2) par l'extrémité d'une buse (1) déplacée au-dessus de cette surface le long d'un trajet déterminé, comportant derrière la buse (1) par rapport à son sens (A) de déplacement des moyens d'éclairement (8) par un faisceau lumineux (12) de la fraction du cordon (3) fraîchement déposé et un organe de détection (9) d'une partie réfléchie de ce faisceau reliée à l'unité de traitement comprenant un capteur (19) constitué par une matrice de cellules numériques photosensibles scrutées par balayage, caractérisé en ce que les moyens d'éclairement sont orientés de manière à produire un faisceau lumineux (12) oblique par rapport à la surface (2) portant le cordon (3) de manière à créer, aux limites (15, 14) arrière et avant de la scène éclairée, dans le sens de déplacement de la buse, une zone (20, 21) dans laquelle seul l'un des éléments cordon (3) ou surface (2) est éclairé (17, 16) et en ce que le capteur (19) intercepte la lumière réfléchie par au moins l'une de ces zones 20, 21).

2. Dispositif selon la revendication 1, caractérisé en ce que l'organe de détection (9) de la fraction réfléchie du faisceau (12) d'éclairement est situé entre la buse (1) et les moyens d'éclairement (8).

## Claims

1. Apparatus for monitoring a bead (3) of joint-forming substance delivered onto a surface (2) by the end of a nozzle (1) moved over said surface along a determined path, the apparatus comprising behind the nozzle (1) relative to its travel direction (A), illumination means (8) for illuminating the recently deposited fraction of the bead (3) with a light beam (12), and a member (9) for detecting a reflected portion of said beam and connected to a processor unit including a sensor (19) constituted by a scanned digital matrix of light sensitive cells, the apparatus being characterized in that the illumination means are directed so as to produce a light beam (12) that is oblique relative to the surface (2) carrying the bead (3) thereby creating, at the boundaries (15, 14) of the illuminated scene that are at the rear and at the front in the nozzle travel direction, respective zones (20, 21) in which only one of the elements constituted by the bead (3) and the surface (2) is illuminated (17, 16), and in that the sensor (19) intercepts the light reflected by at least one of said zones (20, 21).

2. Apparatus according to claim 1, characterized in that the member (9) for detecting the reflected fraction of the illuminating beam (12) is situated between the nozzle (1) and the illumination means (8).

## Patentansprüche

1. Vorrichtung zur Überprüfung des Bandes (3) eines eine Dichtung bildenden Produktes, das auf eine Oberfläche (2) aus dem Ende einer oberhalb dieser Fläche angeordneten Düse (1) entlang einer vorgegebenen Bahn abgegeben wird, wobei die Vorrichtung hinter der Düse (1) - bezogen auf ihre Bewegungsrichtung (A) - Beleuchtungsmittel (8) zum Beleuchten des frisch aufgebrachten Abschnittes des Bandes (3) durch ein Lichtstrahlenbündel (12) sowie ein Detektororgan (9) zum Erfassen eines reflektierten Teiles dieses Bündels hat, das an eine einen Sensor (19) enthaltende Verarbeitungseinheit angeschlossen ist, der aus einer Zellenmatrix aus numerischen, lichtempfindlichen Zellen gebildet ist, die abgetastet werden, dadurch **gekennzeichnet**, daß die Beleuchtungsmittel derart ausgerichtet sind, daß sie ein Lichtstrahlenbündel (12) erzeugen, das bezogen auf die das Band (3) tragende Oberfläche (2) derart schräg einfällt, daß an der vorderen und der hinteren Begrenzungslinie (14, 15) der beleuchteten Szene in Bewegungsrichtung der Düse ein Bereich (20, 21) erzeugt wird, in dem nur eines der Elemente Band (3) oder Oberfläche (2) beleuchtet (17, 16) wird, und daß der Sensor (19) das von mindestens einem dieser Bereiche (20, 21) reflektierte Licht auffängt.

2. Vorrichtung nach Anspruch 1, dadurch **gekennzeichnet**, daß das Detektororgan (9) zum Erfassen des reflektierten Teiles des Beleuchtungsbündels (12) zwischen der Düse (1) und den Beleuchtungsmitteln (8) angeordnet ist.
